# EUROPEAN PATENT SPECIFICATION

(11) **EP 0 885 976 B1**
(45) Date of publication and mention of the grant of the patent: **06.03.2002**
(21) Application number: 97309299.2
(22) Date of filing: 19.11.1997
(51) Int. Cl.: C22B 19/20, C25C 1/16, C25B 1/00, C25C 7/00, C25C 7/06

(54) **Electrowinning of high purity zinc metal from a Mn-containing leach solution preceded by cold electrolytic demanganization**
Elektrolytische Gewinnung von Reinzink aus einer Mangan enthaltenden Laugungslösung durch vorhergehender Entmanganisierung der Lösung mittels kalter Elektrolyse
Production électrolytique de zinc métallique pur à partir de solutions zincifères contaminées en manganèse précédée d'une démanganisation électrolytique à l'état froid

(30) Priority: 20.06.1997 AR 10273397
(43) Date of publication of application: 23.12.1998
(73) Proprietor: Sulfacid S.A.I.F.C., 1010 Buenos Aires (AR)
(72) Inventor: Fussi, Jose Luis, (2156) Fray Luis Bertran, Santa Fe (AR); Quintero, Oscar, (2156) Fray Luis Bertran, Santa Fe (AR); Cornaglia, Aldo, (2156) Fray Luis Bertran, Santa Fe (AR); Morosini, Carlos, (2156) Fray Luis Bertran, Santa Fe (AR)
(74) Representative: Jenkins, Peter David

(56) References cited:
- EP-A- 0 066 024
- DE-A- 3 014 511
- US-A- 3 065 155
- US-A- 4 071 421
- VERBAAN B. & MULLINDER B.: "Simultaneous electrowinning of manganese dioxide and zinc from purified neutral zinc sulphate at high current efficiencies" HYDROMETALLURGY, vol. 7, no. 4, 1981, pages 339-352, XP002078636 Amsterdam, nl

## Description

The present invention relates to a cold electrolytic demanganization process which is applicable to all electrolytic zinc producing plants which use high manganese (more than 0,5 %) blends (zinc sulfide). It is applied prior to standard electrolysis for the electrowinning of zinc and it provides distinct advantages over chemical and electrochemical procedures known to this day.

The variation of certain operating conditions has been found to provide a tenfold increase in the efficiency of manganese removal, compared to the demanganizing electrolytic cells that are commonly used in the art, and that it is possible to maintain this value by using the same anodes for a service period of thirty days in a row, without undue changes or care, and at a low operating cost.

In the electrolysis of a manganese ion containing solution, the following reactions can theoretically take place in the anode:

| Reagents | Reaction products | anode potential: |
|---|---|---|
| 1) 2 H₂O → | O₂ + 4H⁺ + 4e⁻ | E= + 1,23 |
| 2) Mn⁺⁺.+ H₂O.....→ | MnO₂ + 4H⁺ + 2e⁻ | E= + 1,29 |
| 3) Mn⁺⁺.+ 4H₂O....→ | MnO₄⁼ + 8H⁺ + 4e⁻ | E= + 1,35 |
| 4) Mn⁺⁺.+ 4H₂O....→ | MnO₄⁻ + 8H⁺ + 5e⁻ | E= + 1,51 |
| 1) water → melecular oxygen + hydrogen ion 2) manganous ion + water → manganese dioxide + hydrogen ion → 3) manganous ion + water → manganate ion + hydrogen ion 4) manganous ion + water → permanganate ion + hydrogen ion the degree of oxidation will depend on: a) the material used for the anode: b) the electrolyte structure c) the conditions under which the electrolysis is carried out. | | |

It is obviously easier to obtain the lower oxidation condition, instance 1, where there is only oxygen release.

The degree of oxygen release overvoltage depends on the material used as an anode, metal, alloy, graphite, as well as on the degree of surface polishing. The higher it is, the higher will the levels of oxidation be. Otherwise, no matter how high the anodic potential is raised by increasing the potential differential by means of an outer power source, it will only be possible to raise the amount of oxygen bubble release without quite exceeding its discharge potential.

As to the composition of the electrolyte, the value of oxygen overvoltage also depends on it, and so does, therefore, the capability to reach the higher oxidation values of manganese. In said composition the high manganese concentration and low acidity are factors of increase of overvoltage, and therefore, of greater yields of manganese oxidation, this latter being combined with the oxygen generated in the anode before changing to the gaseous molecular state, while it is enough to have certain small quantities of elements or impurities present in the electrolyte to lower the discharge overvoltage of oxygen to such an extent that it is impossible to raise the level of oxidation.

Other factors that determine the conditions of electrolysis, such as temperature, stirring, time of residence, power applied, etc. have are equally important.

Reactions 2, 3 and 4 are also beneficial for the separation of manganese solutions as an insoluble dioxide, since:

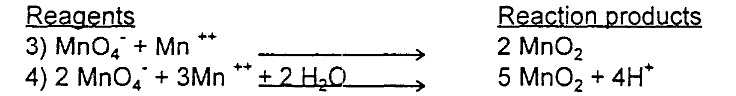

In zinc electrowinning plants the specific electrolysis conditions, as well as the use of lead - silver alloy anodes, usually allows the overvoltage potential of oxygen be low enough for the manganese oxidation efficiency in the electrolyte to be very low, in the order of under 1 %, the remaining 99 % of the current in the anode being used for the oxygen release.

It is precisely this condition which has been modified, the condition which, together with the achievement of stable levels of high efficiency at the anodes, sustained for a long period of time, has allowed to achieve the above objectives.

The starting mineral that zinc electrowinning plants use has other elements in various amounts which must be removed from the process. One of these elements is manganese which, just as the rest of the contaminating material, is incorporated at the stage of leaching the mineral, which is made soluble together with the zinc, with variable degrees of removal depending on the procedure used, to the manganese sulfate state. These solubilized salts, once their solution has been stripped off from the insoluble solids, go on to the purification stage, where undesirable elements are removed, to effect the electrolysis and the desired quality of zinc. The reagents used for this purpose do not have an effect on manganese, which, on the other hand, is not only harmless for electrolysis, within certain concentration values, but it actually favors it, because on its deposition as an insoluble manganese dioxide on the lead - silver alloy anodes, it protects them from corrosion; this is the case for blends with a manganese content of less than 0,5 %, while when higher manganese blends are being processed, there occurs a progressive imbalance with a gradual increase of soluble manganese concentration, since standard electrolysis does not suffice to eliminate such increase; the electrolyte which has gone through the electrolysis cells with the increased manganese is transferred back to the leaching step to redissolve zinc and impurities, and thus, a progressive increase of the manganese concentration in the circuit occurs, which produces an increase of viscosity and density, competes with the solubility of zinc salts and decreases the zinc deposition current efficiency. Concentrations of greater than 10 g/l of manganese in the electrolyte do not allow for a normal operation of the plant.

The prior art relative the removal of manganese from high manganese blends relates to processes that have proven to be inadequate because of their high cost and/or for being difficult to adapt to standard processes.

Generally, the subject has only been examined at the level of laboratory assays, for nearly all the zinc electrowinning plants use only low manganese minerals (< 0,1 %).

The chemical separation procedures (precipitation as a dioxide with ammonium persulfate; with ozone; or precipitation as a hydroxide by raising the pH of the solution through the addition of an alkali compound) are either very expensive or impracticable from the technical plant processing point of view.

Electrochemical procedures, which are more readily accessible than the above, have been mainly oriented o achieve particularly manganese dioxide of an amorphous structure, with a crystalline appearance, strongly attached to the anodes, which is used as a depolarizer in battery manufacturing.

The process raw material and procedures are not adaptable to zinc producing plants (electrolyte with a high concentration of manganese > 10 g/l, absence of solution zinc, high temperature within the cell > 70°C, low current density < 1 Amp/dm²).

The related prior art processes are listed below. Table 1 is a summary of the features of the present invention versus papers and patent publications which are listed below.

### 1) Production of electrolytical manganese dioxide for batteries - Kirk and Othmer Encyclopedia, 1962, Volume X, p. 501

"A part of the manganese carbonate mineral is leached with spent electrolyte (40 g MgSO₄/I and 67 g of SO₄H₂/l) at 290°C to neutralization, precipitated, and ferric iron and silica are then stripped off. The remaining solution has 150 g MgSO₄ left, and it is admixed with spent electrolyte and sent to the electrolysis cells; this solution is kept at a temperature of 90°C within the cells. The cells contain graphite cathodes and antimonious lead anodes with a spacing of 25 mm between them. The manganese dioxide deposited on the anode in a hard, dense, black layer, is removed when it reaches a thickness of 5 mm."

Conclusion: this procedure has been specifically developed to recover battery grade manganese dioxide. The characteristics of the electrolyte used and the electrolysis conditions are very different from the ones of the present invention.

- The following patent specifications and reports on electrolytical demanganization refer specifically to zinc electrowinning plants which have tested certain procedures for the same purpose. They are generally assays that have not gone beyond the lab stage; they are short term and do not account for one of the main factors, which is the period of anode replacement, i.e. its service life, during which there occurs the manganese dioxide formation reaction at high efficiencies during the first few days of service but, which, in most of the procedures proposed, declines rapidly to values that make their use economically impractical.

### 2) Electrolytic Zinc Company of Australasia, Risdon, 1972

Two reports: No. 10 and No. 11.
- No. 10: the specific objective is investigating the conditions required to produce manganese dioxide in the electrolysis cells in a sufficient amount to maintain a level of manganese concentration that is acceptable in the electrolysis circuit.
- No. 11: it offers a description of the literature concerning the manganese dioxide formation concurrent with zinc deposition.

### Report No. 10:

In short, the best conditions to achieve a greater manganese dioxide deposition current efficiency are:
- maximum electrolysis temperature: 90°C
- minimum current density 1 Amp/dm²
- minimum acidity: 10 g/l H₂SO₄
- maximum manganese concentration 25 g/l
- the maximum current efficiency achieved was 20 % for short term assays (24 hours).
- additives (glue and beta-naphtol) are added to enhance zinc deposition, although they do not prove to be satisfactory at the high temperature required for electrolysis. These improve with the use of polyacrylamides.

Conclusion: While numerous assays are being carried out (this report has fifty pages) acceptable conditions are not achieved, since their operating parameters are far from those of the present invention.

### 3) "The simultaneous electrowinning of manganese dioxide and zinc from purified neutral Zinc Sulfate at high current efficiencies"-Hydrometallurgy, 7 (1981) Randburg, South Africa.

They carry out electrolysis prior to standard electrolysis of the solution from the mineral leaching, which has been purified in order to remove impurities. This neutral, purified solution is directly subjected to electrolysis, without acidification, in order to remove the solubilized manganese. The principle of this process being similar to ours, we hereby present a comparative table of electrolyte and electrolysis conditions:

| | RANDBURG | OURS |
|---|---|---|
| solution zinc | 150 g/l | 120 g/l |
| solution manganese | 5 to 20 g/l | 3 to 20 g/l |
| sulfuric acid | < 1 g/l | 50 to 90 g/l |
| mixture with another liquid | none | neutral purified + spent |
| | | electrolyte from standard |
| | | electrolysis |
| electrolysis temperature | 90°C | < 15°C |
| additives: Magnafloc 351 | 50 gm/l | none |
| anode - cathode surface | 3:1 | 1:1 |
| relation | | |
| time of electrolysis assay | 1 day | 30 days |
| anodic current density | a Amp/dm² | 2,8 Amp/dm² |

Conclusion:
- These are assays which have not gone beyond the laboratory stage.
- the different anode - cathode surface ratio would demand the use of special cells and electrodes.
- high temperatures at the cells, with their resulting operating risk
- low current density, which increases the volume of the electrolytical equipment
- the daily need to change the anodes
all of these factors make their industrial scale implementation impractical.

### 4) "Electrolytic process for the recovery of Zinc and Manganese Dioxide" - Canadian Patent No. 1.525.458 (1979).

After the standard electrolysis step in order to recover electrolytical zinc by using lead - silver anodes so as to prevent, as much as possible, the formation of manganese dioxide, the electrolyte from this step goes on to the next step, which is where, according to this patent, the manganese incorporated by the raw material, which the authors expect they can process even with 3 % manganese containing blends, is removed. To that end they use rolled lead anodes, or anodes made of a lead dioxide substrate (PbO₂) laid over graphite or titanium anodes, electrolyzing a lead nitrate solution so as to build said substrate. The electrolysis conditions are as follows:

| | | |
|---|---|---|
| electrolyte | zinc | 50 - 60 g/l |
| | sulfuric acid | 180 - 200 g/l |
| | manganese | 15 20 g/l |
| cell: | temperature | 25 to 45°C |
| | current density | 6 to 17 Amp/ dm² |
| | anodic current yields: | 30 to 58 % |

Conclusion: the electrolysis conditions they provide do not differ substantially from those used at present at Zinc Plants, both for standard electrolysis cells and for demanganizing ones, except for the special use of anodes with a PbO₂ prelayer, i.e., similar results should be obtained. Nevertheless, reality has shown that such high demanganizing current efficiencies are only valid for the first hours of service of the new anodes, and this is where this patent fails to show the service life or duration of the assays. We should assume, therefore, that the results listed have been provided by short term assays wherein the rapid decline of the anodes which takes place under these electrolysis conditions has not been accounted for.

### 5) "Control manganese level in electrolytic Zinc Plant circuit by anodic deposition of oxide" . Ins. Min. Metall. No. 254, Australia, 1975.

It is a description of lab assays which use various material as an anode. They start from feed electrolyte for standard electrolysis cells for zinc electrowinning, which are made up as follows:

| | |
|---|---|
| zinc | 120 g/l |
| sulfuric acid | 200 - 300 g/l |
| manganese | 6 - 25 g/l |
| cobalt | 10 mg/l |

to this electrolyte there are added the following additives:

| | |
|---|---|
| glue | 0,37 kg/ ton zinc |
| beta naphtol | 0,14 kg/ ton zinc |
| antimony | 0,015 mg/l electrolyte (as Sb and K tartrate) polyacrylamides, Magnafloc |

the best demanganizing efficiency conditions found were as follows:

| | |
|---|---|
| current density | 2,9 Amp/dm² |
| electrolysis temperature | 90°C |
| electrolyte acidity | 30 g/l (they do not state how they |
| | lowered initial electrolyte acidity) |

The materials tested for the anode are the following:
lead with 2 % antimony provided efficiencies < 15 %
lead with 0,012 % silver provided efficiencies < 15 %
lead with 0,75 % silver provided efficiencies of 19 % (the highest ones)
graphite disintegrated by 7 days of service
titanium with MnO₂ prelayer (stabilized at 200°C) became passive by the third day
the manganese dioxide scale attached to the anodes was periodically removed with a wooden scraper.

The assay time for each type of anode was 7 days.

Conclusion: the negative factors found in this procedure are:
- high temperature within the cells
- low demanganizing efficiency
- short term testing, which does not allow to monitor the decline of anode efficiency, so low in itself for such short term service.

### 6) "Production of electrolytic Manganese Dioxide in Japan" - Journal of Metals, 1970 (comments equal to item # 1.

### 7) U.S. Patent No. 3.065.155 to Chemetals

They carry out a laboratory assay starting from liquid drained off from the acid leaching step, to which is added additional sulfuric acid and which, under these conditions, without previous purification, is subjected to electrolysis so as to separate the manganese as a dioxide. Its composition is as follows:
zinc: 125 g/l; iron: 11 g/l; copper, 2,8 g/l; manganese: 13 g/l; sulfuric acid: 8
190 g/l
according to their description, the demanganizing cell has lead electrodes in the shape of pipes for inner flow of cold water in order to keep the temperature < 20°C.

### This cell operates at a very high current density: 37 Amp/ dm²

The outlet electrolyte in the cell, according to their description, has the same composition, except for the manganese, whose concentration goes down to 3 g/l, since they state none is deposited on the cathode.

The liquid thus treated is then sent to a neutral leaching step, and afterwards to the purification steps, after which it is used as a feed for conventional electrolysis cells.

Conclusion: in spite of the configuration of the electrodes making it impossible to install this electrolysis cell in the Plant, there was carried out a laboratory assay under similar electrolyte concentration conditions and other variables. We achieved no deposit on the cathode or formation of manganese dioxide on the anode. It is expected, by virtue of the profuse literature on the subject of the negative influence of impurities on zinc electrolysis, that on feeding the cell with electrolyte that has not been previously purified, the hydrogen overvoltage on the cathode and that of oxygen at the anode drop to such a value that zinc fails to deposit or manganese dioxide to form, respectively, there being achieved only an oxygen and hydrogen release.

Some of the advantages of the above references can be found in items such as 1, 2 and 3, wherein the temperatures used are not applicable in Plant for safety reasons, as well as for the high level of corrosion, besides the fact that these procedures demand a great amount of electrolytical cells, because they utilize low current densities. As to reference # 4, we estimate testing times are short on the basis of the conclusions that were reached. Similarly, processes # 5 and 6 operate at temperatures that are impractical and at relatively low efficiencies; finally, in reference # 7 the results were completely negative.

None of the processes described have shown to provide high long term efficiencies, though some of them do have high efficiencies for a reduced period of time, being that this is one of the determining economic factors to carry out this process.

Figure 1 shows a demanganizing process of the present invention, wherein 1 is the settling tank, 2 is the cooling equipment; 3 are the electrolysis cells for the removal of manganese, the flow of the different fluids being also shown.

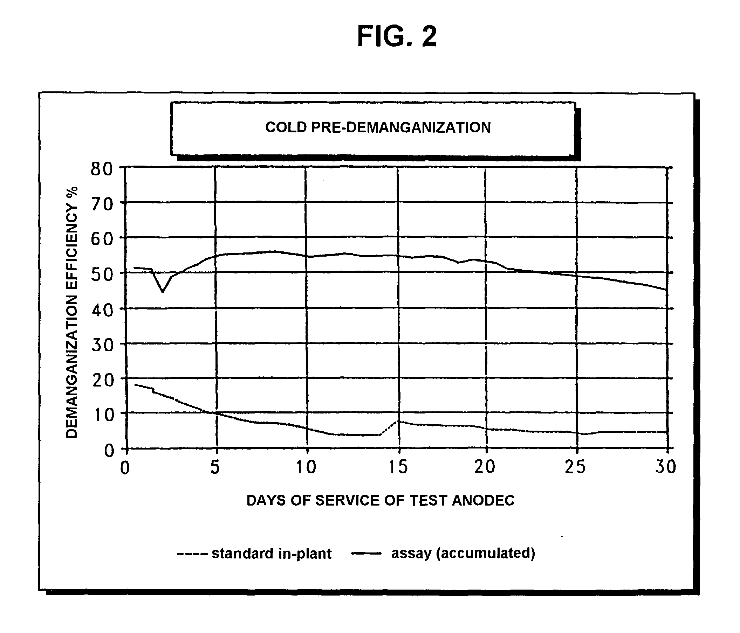

Figure 2 shows a graph of the demanganizing efficiencies, as a percentage, both for the testing of this process at a Pilot Plant, and for the normal procedure in Plant without this process, for several days of service of the anodes both in the assay and in Plant.

### Detailed Description of the Invention:

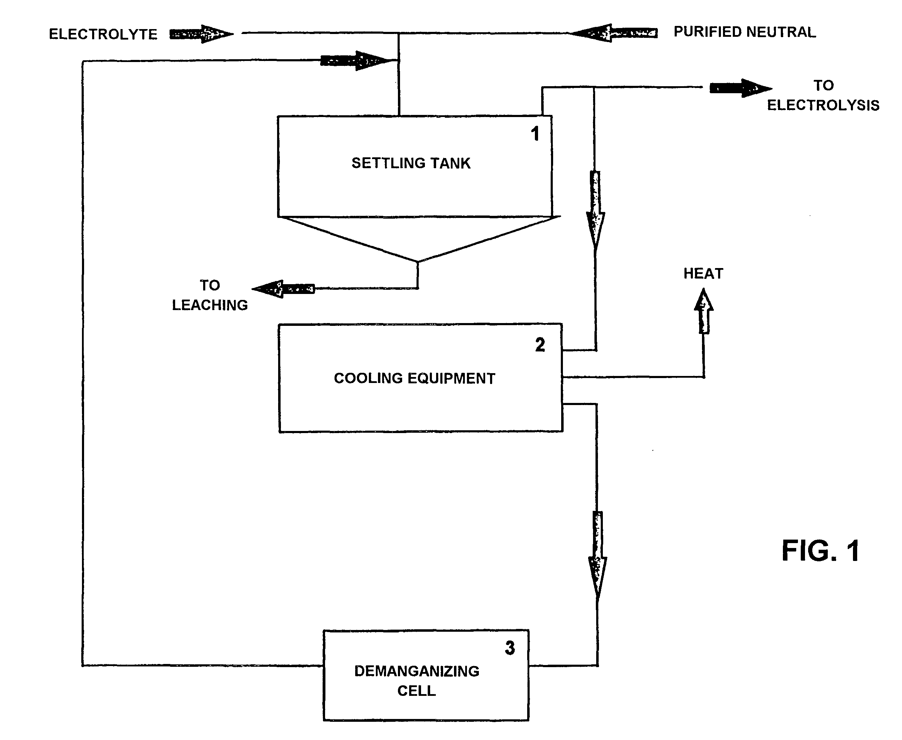

The present invention refers to a process and an equipment, as defined in the claims, which include cold demanganization prior to standard electrolysis. The instant process is shown as a whole in Figure 1, and it refers to a method which allows for removal of manganese solubilized during leaching, whether from calcination or from direct pressure leaching of the high manganese content blend. Manganese is incorporated as a soluble sulfate together with the corresponding zinc compound after the purification steps where impurities that are undesirable for electrolysis and the amount of zinc produced are removed, and before using it for the electrodeposition of zinc.

The intermediate demanganization step, prior to conventional electrolysis, allows to simultaneously remove the mass of manganese added, by stripping it off the solution as a manganese dioxide (manganese separated as a dioxide at a low temperature appears, through X rays, as a microcrystalline structure of cryptomelanes with K, Na and NH₄ inclusions, with the appearance of a dense mud unattached to the anode, in a non settling slurry).

Basically, the operating conditions of the process and the features of the equipment used are as follows:
- electrolysis of the solution from the purification step mixed with the spent electrolyte so as to obtain an inlet acidity of between 50 and 90 g/l.
- solution being introduced into the electrolysis cells at a low temperature, of under 15°C.
- electrolysis cells, anodes made of rolled chemical lead and cathodes made of aluminum.
- Current density applied to the electrodes from 200 to 400 amperes/ m².
- air injection in the electrolysis cells so as to homogenize the solution and keep the solid generated in suspension.
- ageing and settling of the solid formed by means of a settling tank and the addition of a flocculant.

The inner recirculation circuit used is shown diagrammatically in figure 1. The equipment used consists of:
- an ageing and settling step of the solid that has been formed, which consists of a settling tank 1 fed by the spent electrolyte from the standard electrolysis cells to 20 % of the total volume added to the settling tank at 30 - 40°C; purified neutral from the leaching - purification steps to 30 % of the total volume added to the settling tank, at a temperature required to achieve a mixture which, together with the liquid return from the demanganization cells 3, which is 50 % of the total volume added to the settling tank, at a final temperature of 25 - 35°C; the appropriate amount of flocculant is added to this mixture before it enters the settling tank, so as to allow for ready separation of the manganese dioxide mud, and the basic salts (calcium and manganese sulfates) that go with the neutral purified solution. The concentration ratio of the settled slurry is 40 - 60 times that of the feed. This settled slurry returns to the leaching step wherein it is removed together with the rest of the insoluble slurries. The clarified solution from the settling tank overflow is split into equal flows, one of which goes on to feed the standard electrolytical cells and the other one flows toward:
- a cooling step where, by means or an exchanger - cooler provided with the corresponding cooling equipment this clarified solution is cooled to such an extent that the overflow from the demanganization cells has a temperature of 10°C. This clarified solution is sent to:
- an actual demanganization step, wherein, under the conditions stated, the separation of soluble manganese from the solution as an insoluble manganese dioxide takes place at the electrolytical cells. The solids and liquids suspension which overflows form said cells is transferred , via a closed circuit, to the settling tank, thus closing the treatment cycle.

### Example 1: test carried out at the Lab:

Continual electrolysis was effected for 16 days so as to define the pilot scale assay.

The conditions for this test were as follows:
anode made of rolled chemical lead and cathodes made of aluminum as electrodes in an Al-Pb-Al arrangement, of equal exposed surfaces (0,36 dm²); were fed by a constant current at a density of 2,8 Amp/ dm² and by feeding electrolyte which was composed of 50 % v/v of the purified neutral solution containing 150 g/l zinc and 40 % v/v electrolyte from the standard electrolysis circuits containing 200 g/l of free sulfuric acid and 60 g/l zinc. The resulting mixture contains 70 g free sulfuric acid and 120 g/l zinc.

By means of the cooling equipment, whose cooler surrounded the cell, the liquid inside the latter was kept at 10°C. In order to homogenize the temperature, it was gently and intermittently stirred by air.

The flow of electrolyte to the cell was such that, with an inlet concentration of 7 g/l of manganese, the outlet concentration was half that amount.

The demanganization efficiency averaged 53,2 %.

Such high efficiency, together with the operating conditions which are readily accessible, warranted the progress to an assay at the Pilot Plant.

The lab test results are shown in Table 2.

### Example 2: Assay carried out at Pilot Plant:

### 2,1. Electrolysis:

The test scale was 1000 times greater than the lab test scale and the production volume was 1:300 compared to the in-Plant production.

The equipment used at the Pilot Plant was as follows:
- an electrolysis cell of 1/5 electrode capacity, compared to the standard Plant cells, which was made of an iron sheet with an inner high density polyethylene lining arid outer expanded polyurethane insulation
- four anodes made of rolled chemical lead of the same size as the ones at the Plant, total exposed surface 386 dm².
- five alternated cathodes, of the same size as the ones at the Plant
- a rectifier with a 1000 ampere/ h continued direct current capacity at 4 volts, with current adjustment
- a current integrator at ampere/ hour
- a 600 I purified solution / electrolyte mixing tank,
- driving pumps for a 1 to 2 m³/ h flow at 2 kg/ cm² pressure.
- a shell - core type heat exchanger for 23.000 kcal/h exchange, made of AISI 316L stainless steel.
- a settling tank for the separation of manganese dioxide and basic salts, made of AISI 316L stainless steel, with a 480 I capacity.
- a cooling mode which consists of an ammonia compressor, condensation tower and receiver- separator, coupled with the heat exchange unit with a 23.000 kcal/ h exchange capacity.

### Laboratory

The duration of this test was thirty days net.

There was little dioxide buildup within the cell, thereby only requiring cleaning at 15 day intervals.

The zinc deposits on the cathodes, which were smooth and easily detachable, were raised every 36 hours.

The anodes were raised at 10 day intervals and washed with a flushing pump. Every time the cathodes were raised, without removing them, to separate the zinc that been deposited, the slurry attached to the anodes was removed with a rubber scraper.

The quality of the zinc deposited, due to the limited corrosion undergone by the lead anodes, exhibits low contamination by this element, corresponding to 99,99 % purity.

The cathodic deposit current efficiency averaged 85 % (1,04 kg. Zn/ Kamph).

The anodic current efficiency averaged 43,4 % (0,44 kg Mn/KAmph).

Table 3 shows the results achieved with the process of the present invention at the Pilot Plant.

### 2.2 Ageing, flocculation and settling of the suspension exiting the demanganization cells

The manganese dioxide generated by this process is very fine, non filterable and settleable by means of artificial flocculants.

It is left to stand for a day until it reaches room temperature; under these conditions it is very easy to settle with polyacrylamides. The ageing time can be shortened by stirring the solution and raising the temperature beyond room temperature (35 - 40°C). Under these conditions one hour of ageing is enough to separate the solid from the liquid.

The previous tests were carried out in the normal, routine way, with test tube settling of the suspension. The data obtained are shown in form 2 of the pilot test, and they are as follows:

| | |
|---|---|
| flocculant/ solid ratio | 6,6 KG/ ton of solid |
| settling rate | 0,2 meters/ minute |
| solid compaction | from 0,7 g/l to 39 g/l (1 hour standing) |

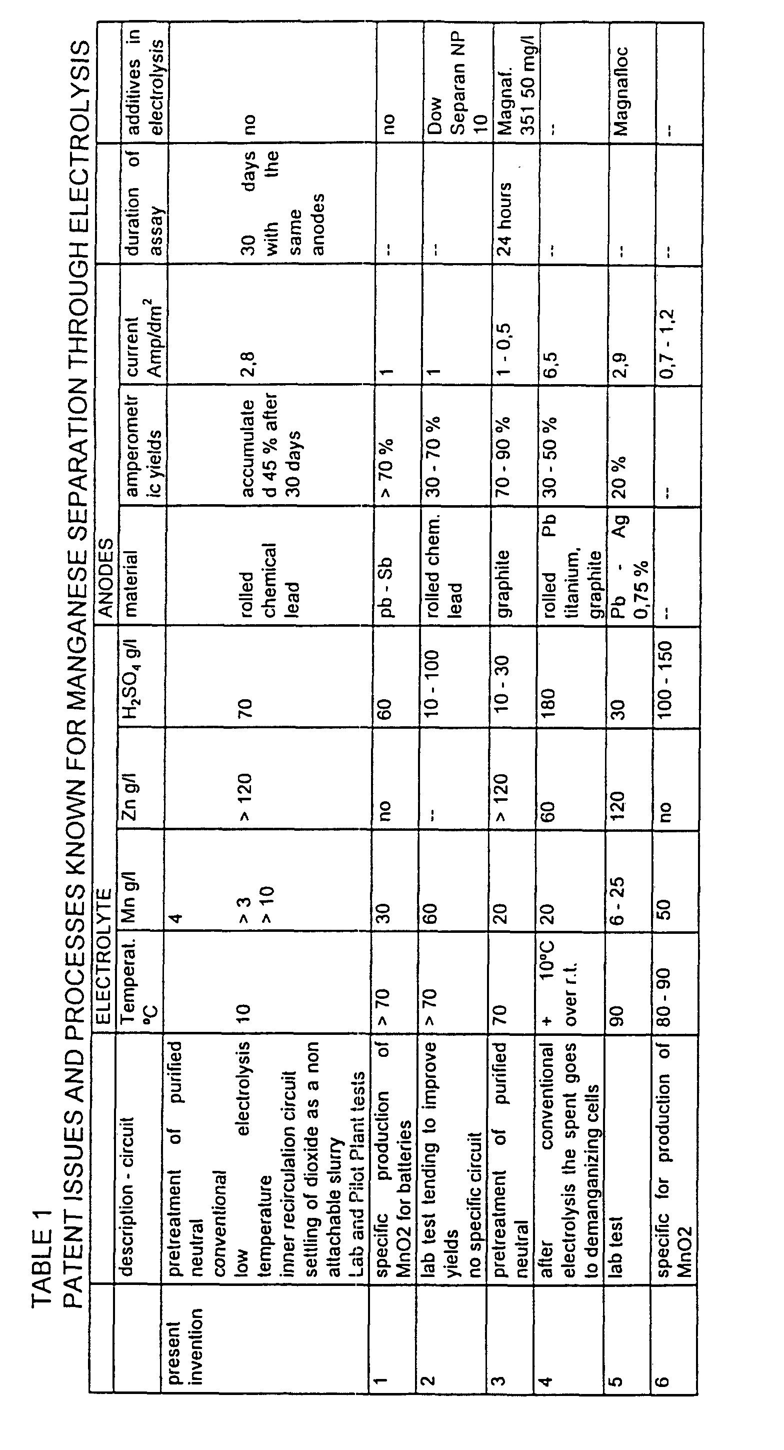

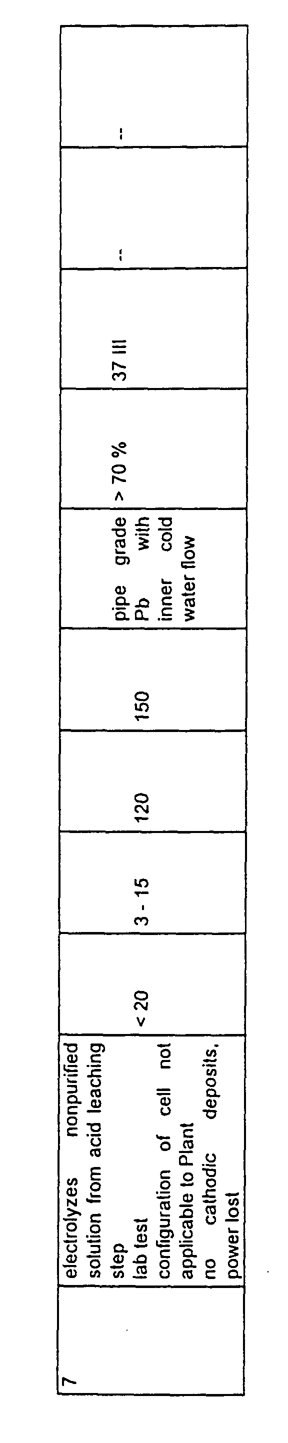

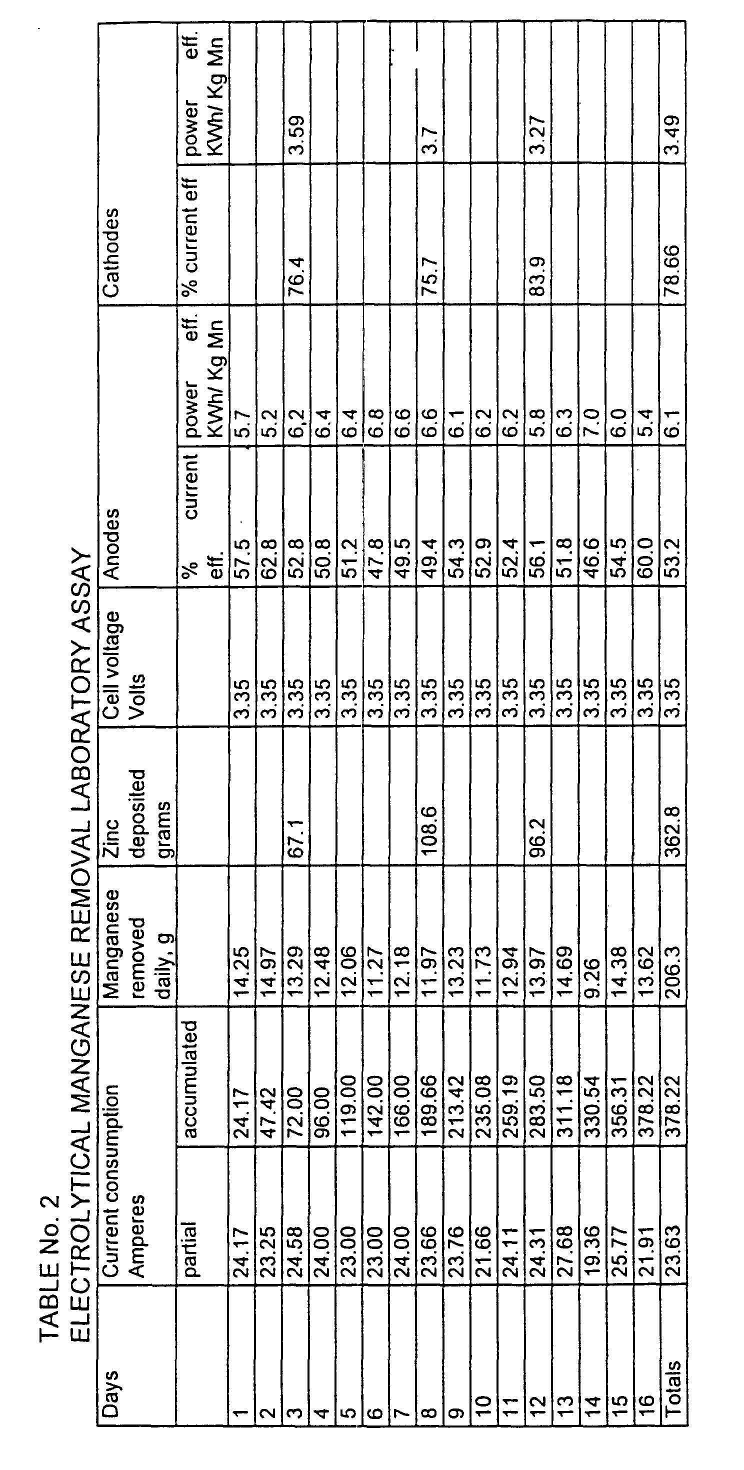

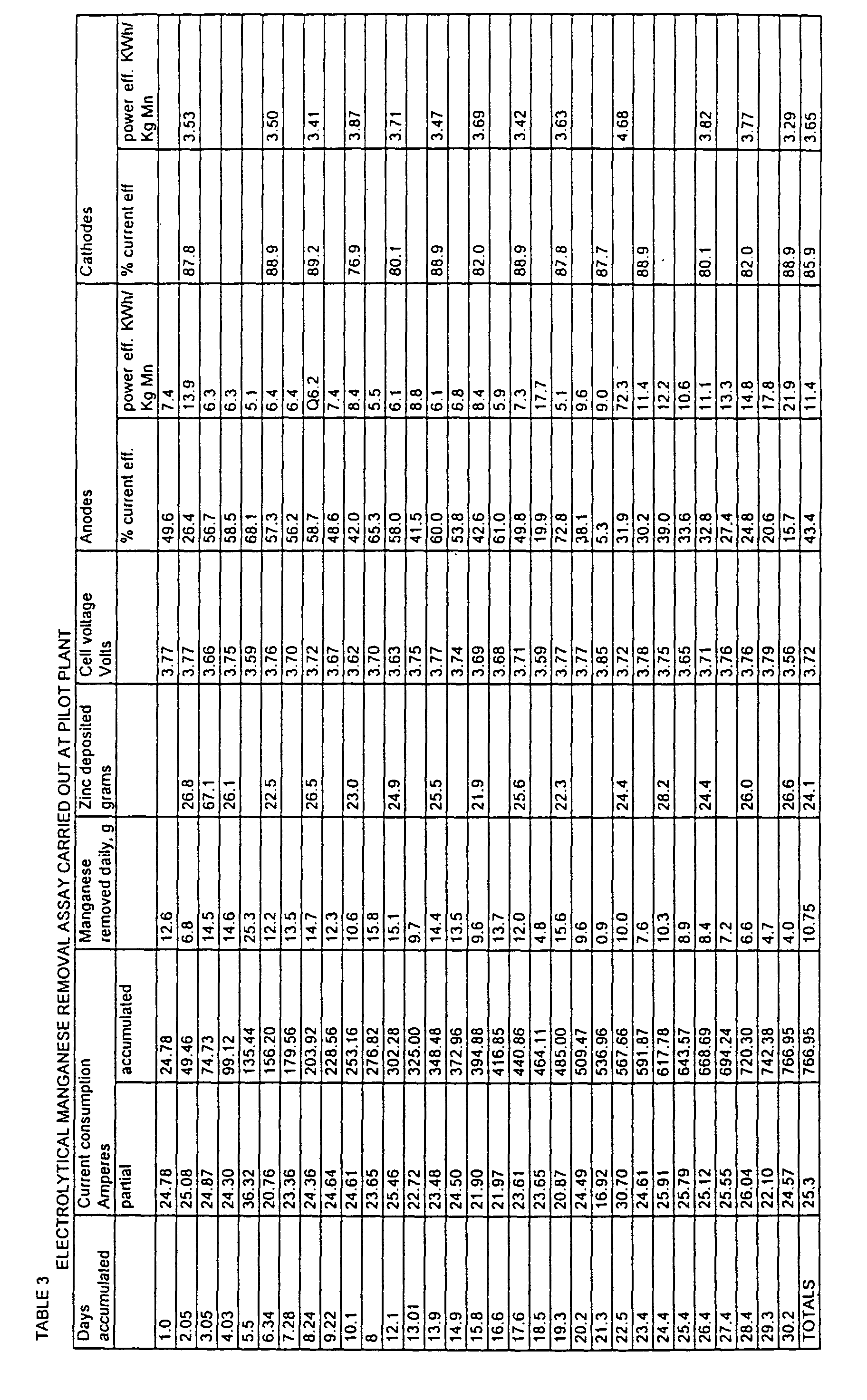

## Claims

1. A process for obtaining high purity metal zinc at high current efficiencies from zinc minerals with high manganese contents by a cold electrolytical demanganization process which is carried out after the steps of leaching the mineral and purifying the leached solution, and prior to the standard electrolysis step for obtaining metal zinc, **characterized by** comprising:
I) Mixing the solution from the purification step with electrolyte from the standard zinc electrolysis cells so as to achieve a sulfuric acidity of between 50 and 90 g/l and adding it to the slurry exiting the electrolytical demanganization cells in order to achieve a final mixture at a temperature of 25 to 35°C,
II) Adding a high molecular weight flocculant to this mixture and settling to separate the manganese dioxide solids formed in the demanganizing cells, as well as the insoluble basic calcium and magnesium salts, partially diverting the clear overflow solution from the settling tank to the standard zinc electrowinning cells feed, the remaining solution flowing to a heat exchanger provided with appropriate means to cool the solution to less than 15°C,
III) Electrolysing said cooled solution in the demanganizing cells and returning the resulting overflow slurry to the step of mixing it with the purified solution and electrolyte from the standard electrolysis cells.

2. The equipment required to carry out the process of claim 1, **characterized by** comprising, as its mayor elements:
electrolysis cells in a number that is suitable for the flows, times of residence and amounts of manganese to be removed,
anodes made of rolled chemical lead and aluminum cathodes of shape and size equal to those used for standard electrolysis, in a number that is required to guarantee a continuous current feed of 200 to 400 Amp/m²,
a rectifier that is suitable to maintain said current density and power required for the amount of demanganizing cells being used,
a heat exchanger provided with cooling equipment, capable of lowering the temperature of the fluid entering the electrolysis demanganizing cells to less than 15 degrees centigrade,
a solid - liquid separator to separate the insoluble matter formed at the demanganizing cells from the ones connected with the purified neutral liquid,
said elements being assembled for carrying out the process of claim 1.

## Patentansprüche

1. Verfahren zur Gewinnung von hochreinem metallischem Zink bei hohen Stromausbeuten aus Zinkmineralien mit hohen Mangangehalten durch ein kaltes Elektrolyseverfahren der Entmanganisierung, das nach den Schritten der Mineralauslaugung und der Reinigung der ausgelaugten Lösung und vor dem Standardelektrolyseschritt zur Gewinnung von metallischem Zink durchgeführt wird, **dadurch gekennzeichnet, dass** es umfasst:
I) Mischen der Lösung aus dem Reinigungsschritt mit Elektrolyt aus den Standardzellen der Zinkelektrolyse, um eine schwefelsaure Acidität von 50 bis 90 g/l zu erhalten, und dessen Zugabe zu der die Elektrolysezellen der Entmanganisierung verlassenden Aufschlämmung, um ein Endgemisch bei einer Temperatur von 25 bis 35°C zu erhalten,
II) Zugabe eines Flockungsmittels hohen Molekulargewichts zu diesem Gemisch und Absetzenlassen, um die in den Entmanganisierungszellen gebildeten Mangandioxid-Feststoffe sowie die unlöslichen, basischen Kalzium- und Magnesiumsalze abzutrennen, teilweises Ableiten von klarer Überlauflösung aus dem Absetzbehälter in die Zuführung der Standardzellen der Zinkelektrogewinnung, wobei die verbleibende Lösung zu einem Wärmeaustauscher fließt, der mit geeigneten Mitteln versehen ist, um die Lösung auf weniger als 15°C abzukühlen,
III) Elektrolysieren der gekühlten Lösung in den Entmanganisierungszellen und Zurückführung der resultierenden Überlaufaufschlämmung zu dem Schritt, in dem diese mit der gereinigten Lösung und dem Elektrolyt aus den Standardelektrolysezellen gemischt wird.

2. Ausstattung, die benötigt wird, um das Verfahren nach Anspruch 1 durchzuführen, **dadurch gekennzeichnet, dass** diese als Hauptbestandteile umfasst:
Elektrolysezellen in einer Anzahl, die geeignet ist für die Durchflüsse, Verweilzeiten und Mengen von zu entfernendem Mangan,
Anoden aus gewalztem Feinblech und Aluminiumkathoden von einer Form und Größe, die derjenigen entspricht, die für Standardelektrolyse verwendet wird, in einer Anzahl, die benötigt wird, um eine kontinuierliche Stromzuführung von 200 bis 400 Amp/m² zu garantieren,
einen Gleichrichter, der geeignet ist, die Stromdichte und Leistung aufrecht zu erhalten, die für die Menge an verwendeten Entmanganisierungszellen benötigt wird,
einen mit einer Kühlvorrichtung ausgestatteten Wärmeaustauscher, der in der Lage ist, die Temperatur des Fluids, welches in die Elektrolysezellen der Entmanganisierung eintritt, auf weniger als 15°C zu erniedrigen,
einen Fest-Flüssig-Separator, um die unlösliche Materie, die an den Entmanganisierungszellen gebildet wird, von denjenigen, die mit der gereinigten, neutralen Flüssigkeit verbunden sind, abzutrennen,
wobei die Bestandteile zusammengefügt werden, um das Verfahren nach Anspruch 1 durchzuführen.

## Revendications

1. Procédé pour l'obtention de zinc métallique de grande pureté à de grands rendements en courant à partir de minéraux renfermant du zinc ayant de hautes teneurs en manganèse par un procédé de démanganisation électrolytique à basse température qui est mis en oeuvre après les étapes de lixiviation des minéraux et de purification de la solution de lixiviation, et avant l'étape classique d'électrolyse pour obtenir du zinc métallique, **caractérisé en ce qu'**il comprend les étapes consistant à :
I) mélanger la solution de l'étape de purification à un électrolyte de cellules classiques d'électrolyse de zinc de manière à parvenir à une acidité sulfurique de 50 à 90 g/l, et à l'ajouter à la suspension quittant les cellules de démanganisation électrolytique afin d'obtenir un mélange final à une température de 25 à 35°C,
II) ajouter un floculant de haut poids moléculaire à ce mélange et à laisser déposer pour séparer le dioxyde de manganèse solide formé dans les cellules de démanganisation, ainsi que les sels de calcium et de magnésium basiques insolubles, à dévier partiellement la solution limpide de débordement du réservoir de sédimentation à la charge d'alimentation des cellules classiques d'extraction électrolytique de zinc, la solution restante s'écoulant jusqu'à un échangeur de chaleur muni de moyens appropriés pour refroidir la solution à une température inférieure à 15°C,
III) électrolyser ladite solution refroidie dans les cellules de démanganisation et à renvoyer la suspension de débordement résultante à l'étape de son mélange à la solution purifiée et à l'électrolyte des cellules classiques d'électrolyse.

2. Installation requise pour la mise en oeuvre du procédé suivant la revendication 1, **caractérisée en ce qu'**elle comprend, comme éléments principaux :
des cellules d'électrolyse en un nombre qui est en rapport avec les vitesses d'écoulement, les temps de séjour et les quantités de manganèse à séparer,
des anodes constituées de plomb chimique laminé et des cathodes en aluminium ayant une forme et des dimensions égales à celles utilisées pour une électrolyse classique, en un nombre qui est requis pour garantir une alimentation en courant continu de 200 à 400 Amp/m²,
un rectificateur qui est apte au maintien de ladite densité de courant et de ladite puissance requises pour la quantité de cellules de démanganisation utilisées,
un échangeur de chaleur muni d'un dispositif de refroidissement, capable d'abaisser la température du fluide pénétrant dans les cellules de démanganisation électrolytique à une valeur inférieure à 15 degrés centigrades, et
un séparateur solide-liquide pour séparer la matière insoluble formée au niveau des cellules de démanganisation de celles connectées au liquide neutre purifié,
lesdits éléments étant assemblés pour la mise en oeuvre du procédé suivant la revendication 1.
